(19) Europäisches Patentamt
European Patent Office
Office européen des brevets

(11) **EP 2 699 951 B1**

(12) **EUROPEAN PATENT SPECIFICATION**

(45) Date of publication and mention of the grant of the patent:
**22.06.2022 Bulletin 2022/25**

(21) Application number: **12717096.7**

(22) Date of filing: **19.04.2012**

(51) International Patent Classification (IPC):
**G02B 5/18** (2006.01)      **B42D 25/29** (2014.01)

(52) Cooperative Patent Classification (CPC):
**B42D 25/29; G02B 5/1857;** B42D 25/328;
B42D 2033/26

(86) International application number:
**PCT/EP2012/057133**

(87) International publication number:
**WO 2012/143426 (26.10.2012 Gazette 2012/43)**

(54) **ASYMMETRIC OPTICALLY EFFECTIVE SURFACE RELIEF MICROSTRUCTURES AND METHOD OF MAKING THEM**

ASYMMETRISCHE OPTISCH WIRKSAME OBERFLÄCHENRELIEFMIKROSTRUKTUREN UND VERFAHREN ZU IHRER HERSTELLUNG

MICROSTRUCTURES À RELIEFS DE SURFACE OPTIQUEMENT EFFICACES ASYMÉTRIQUES ET LEUR PROCÉDÉ DE RÉALISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2011 EP 11163126**

(43) Date of publication of application:
**26.02.2014 Bulletin 2014/09**

(73) Proprietor: **ROLIC Technologies AG**
**4123 Allschwill (CH)**

(72) Inventors:
• **JAQUET, Sylvain**
  **4123 Allschwil (CH)**
• **IBN-ELHAJ, Mohammed**
  **4123 Allschwil (CH)**
• **MARTZ, Julien**
  **68200 Mulhouse (FR)**

(74) Representative: **Veenstra, Eva**
**Rolic Technologies Ltd.**
**Patent Department**
**Gewerbestrasse 18**
**4123 Allschwil (CH)**

(56) References cited:
EP-A1- 1 227 347     WO-A2-03/084766
WO-A2-2009/090091    US-A- 3 623 786
US-A- 5 279 924      US-A1- 2005 068 625
US-A1- 2005 130 072   US-A1- 2007 058 260

**Description**

TECHNICAL FIELD

The invention relates to optical security elements with asymmetric surface relief microstructures which provide a characteristic color appearance.

BACKGROUND OF THE INVENTION

Since many years, optical devices are applied as security elements for example to banknotes, credit cards and documents of value for the protection against counterfeiting. In addition, optical security devices are used for brand protection and are applied to articles for authentication. Optical security elements may be detected by machines but in many cases it is desired that human observers are able to identify the authenticity of the element and hence of the document or article it protects. Among the different types of optical effects that are implemented in security elements optically variable devices (OVD) are well established, since they provide complex optical appearance, which changes depending on parameters such as the observation angle. On the other hand, the optical effect of such devices can not be simply copied by photographic reproduction.

OVDs are, for example, based on interference at thin layers, diffractive and/or scattering surface structures or cholesteric liquid crystal layers. Typically, such devices provide a change of color or brightness upon changing the observation angle or the incidence angle of light.

Well known OVDs are holograms which have been used as security elements since many years. However, in the meantime the hologram technology is very widespread and holograms are also used for applications other than security elements. In addition, many people have access to the hologram technology. Hence, the security level of holograms has been decreased over the years and consequently there is a demand for alternative OVDs, providing optical effects which can be distinguished from holograms.

An alternative OVD, which is disclosed in US 5,101,184, uses asymmetrical diffraction gratings. Like for symmetrical diffraction gratings, the diffraction angles for light which is incident from the normal to the device surface depends on the diffraction order, the spatial frequency of the diffraction grating and the wavelength of the light. For asymmetrical diffraction gratings, however, the intensity of the light diffracted into the positive and negative diffraction orders is asymmetric. The typical rainbow colors resulting from diffraction gratings therefore appear with different intensities when observed from opposite directions.

A disadvantage of many diffractive security elements is the narrow solid angle at which it is visible to an observer. To increase the angular range of visibility, a superposition of a periodic asymmetrical diffraction grating with a non-periodic matt structure is proposed in US 2005/0068625. As a result, the diffraction grating is stochastically modulated. As for the asymmetric grating above, the diffraction grating causes the diffracted light to split up into the spectral colors, whereas the light intensity is not symmetrically distributed because of the asymmetry of the grating. The superposed matt structure causes smudging of the pure spectral colors, thereby increasing the angular range under which the security element is visible. The matt structure may be anisotropic, which has the effect, that the light is scattered into preferred directions.

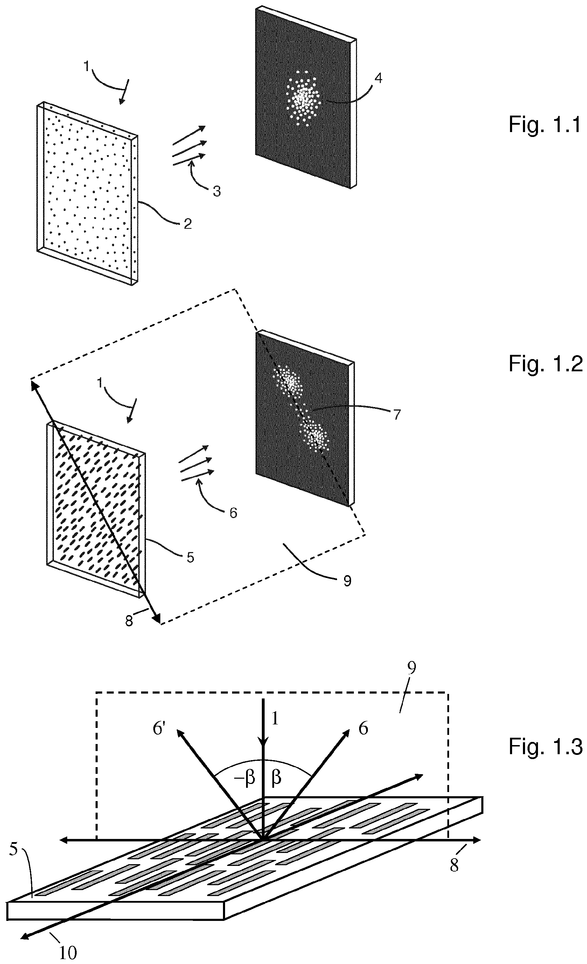

Scattering at an isotropic scattering surface is such that no azimuthal direction is preferred. As indicated in Fig. 1.1, collimated incoming light 1 is redirected at the scattering surface 2 into new outgoing directions 3 with a characteristic axial-symmetric output light distribution and a characteristic divergence angle 4.

In case of an anisotropic scattering surface the light is scattered into preferred azimuthal directions. In Fig. 1.2, collimated incoming light 1 impinges on an anisotropically scattering surface 5 and is redirected into new outgoing directions 6 with a characteristic output light distribution 7.

In connection with the illustrations of anisotropic scattering in Figs. 1.2 and 1.3 some terms shall be defined, which will be used in the context of the present invention:

- The preferred scattering plane 9 is defined as a plane perpendicular to the anisotropic scattering surface 5, into which the light is scattered with the highest intensity.
- The preferred scattering axis 8 is a line along the intersection of the anisotropic scattering surface 5 and the preferred scattering plane 9.
- The anisotropic axis 10 is an axis within the anisotropic scattering surface 5 perpendicular to the preferred scattering plane 9.

WO2007/131375 discloses a non-periodic, anisotropic surface microstructure, which has a surface modulation of top regions and bottom regions, wherein the top regions substantially lie in the same top relief plateau and the bottom regions substantially lie in the same bottom relief plateau. Due to a superposition of interference and scattering effects, such surface relief microstructures cause the scattered light to have a distinct and saturated color appearance, without the rainbow colors which typically appear for diffraction gratings. For vertically incident light, color and intensity of the scattered light are symmetric relative to the incident light direction within a plane containing the incident direction of the light. This is especially true if the preferred scattering plane 9 is considered, as illustrated in Fig. 1.3. Color and intensity of light scattered into the directions 6, 6' under the angles +β and -β within the preferred scattering plane 9 are identical. Therefore, the optical appearance of such a structure does not change if the structure is azimuthally rotated by 180°. A surface relief structure according to the preamble of claim 1 is known from US2007058260 A1. Z

## SUMMARY OF THE INVENTION

The invention is defined by the appended claims.

An object of the present invention is to provide alternative surface relief structures for optical security elements, which when illuminated with vertically incident white light cause anisotropic scattering such that the scattered light is colored without showing rainbow colors, whereas intensity and color of the scattered light is not symmetric with regard to the direction of the incident light.

A further object of the present invention is to provide methods of making such surface structures.

A still further object of the present invention is a security element comprising such structures.

The term white light shall mean light covering wavelengths over the whole visible range, with a spectral distribution that appears white to the human eye, for example daylight.

Colored light shall mean light, which a human observer distinguishes from the white light as defined above as being colored. Hence, the spectral distribution over the visible wavelength range differs from that of the white light. A mere change of the intensity of white light does therefore not generate colored light.

The above definitions shall in no way restrict the use of the optical elements according to the invention to certain light sources or light spectra used for observation.

In a first aspect, the present invention provides a surface relief structure for use in optical security elements, which comprises grooves and anisotropic lands, wherein the grooves and lands are arranged non-periodically along the preferred scattering axis, and the heights of the lands are within one ore more height levels, and the upper surfaces of the lands and the surfaces of the grooves are flat and substantially parallel to each other, characterized in that in a cross-section with the preferred scattering plane the flanks of the lands are asymmetric. The characterizing feature shall mean that the flanks of the lands within the cross-section are not mirror-symmetric with regard to a line normal to the upper surface of the lands. Within above cross-section, the shape of the flanks may be that of a straight line but may also be curved. To distinguish between different flanks, the inclination angle of the flanks versus the normal to the upper surface of the lands is used. In case of a curved flank, an inclination angle, which is determined from a straight line, connecting the top and foot of the flank is used.

In the context of the present invention, a flat surface is a surface, wherein the vertical variation across the surface is less than a certain value, which depends on the depth of the structure.

The optical effect resulting from a structure according to the invention is, for example, that if the structure is illuminated with vertically incident white light, the scattered light is colored over a broad angular range, but intensity and color of the scattered light is not symmetric with regard to the direction of the incident light. The characteristic color of the scattered light does only slightly change within a broad observation angle and the split up into rainbow colors for different observation angles does not occur.

A structure according to the present invention does not necessarily have to be illuminated with white light to generate the characteristic optical effect, however, the effect is more pronounced for light covering a broad wavelength range. On the other hand, there may be applications, where a different optical effect is desired and which use illuminating light with certain wavelength bands only. Preferably, the light used for observation provides a wavelength range broader than 50 nm, more preferably broader than 100 nm and most preferably broader than 200 nm.

The characteristic optical effect caused by a surface relief structure according to the invention is a combination of scattering and interference. Because the lands and grooves are arranged non-periodically, the light is not diffracted but scattered. Therefore, the light is not split up into spectral colors, which in case of a periodic structure, such as a grating, would appear as rainbow colors upon varying the observation angle. Because the lands are arranged non-periodically, the flanks are non-periodic as well and therefore do not cause interference colors. Non-periodical arrangement of lands with asymmetric flanks therefore causes asymmetric scattering of light. The characteristic color of light scattered at a surface structure according to the invention is due to interference of light scattered at the flat grooves and flat upper surfaces of the lands. For the interference to be effective, it is important that the lands and grooves are flat and have one or more distinct height levels. Due to production tolerances there is always some slight variation of the heights of lands even if it is desired that all of the lands have the same height. The term height level shall therefore be used in the context of the present invention to group lands of similar heights.

The color of the scattered light strongly depends on the height of the lands within the microstructures. For example, with increasing heights of the lands the colors yellow, orange, violet, blue and green are generated. For even higher lands, higher order colors appear.

Surface structures according to the invention may be observed in transmission or in reflection. In order to enhance the optical effect for the specific use, additional layers, such as reflecting or dielectric layers, may be applied below or above the surface structures.

The shapes of the upper surfaces of the lands may be arbitrary but can also have a high symmetry, such as, for example, a rectangular shape. Lands may also have branches in different directions, and a branch may merge with another land. It may even be that the whole structure consists of interconnected lands. With regard to the definitions of the dimensions of the lands, a branched land is split up into individual lands according to the following rule: the longest possible path along one direction within the branched land is considered as the centre land and each of the other branches are considered as additional lands, which end at the junction with the centre land. If a branch itself is further branched then it is split up into individual lands according to the rule above until only non-branched lands are left.

For the following definitions of the land dimensions only the upper surface of each land is considered. A structure according to the invention comprises lands with anisotropic shape, which means that in average the lands are longer in a first direction than in a second direction, which is perpendicular to the first direction. In the context of the invention the main axis of a land is defined as the direction, for which the ratio of the length along this direction to the width perpendicular to it is highest. If there is more than one direction fulfilling this condition, then out of these directions the main axis is the direction along which the land is longest. The length of the land is defined as the length along the main axis, whereas the width of a land is defined as the averaged width in the direction perpendicular to the main axis. The ratio of length to width is defined as the aspect ratio of the land.

According to the invention the main axes of the lands are in average oriented in a preferred direction, which corresponds to the anisotropic axis. The degree of orientation of the lands within a surface relief structure according to the invention can be described by an order parameter S, as

$$S = \left\langle \frac{3\cos^2 \theta - 1}{2} \right\rangle,$$

wherein $\theta$ is the angle between the main axis of a land and the anisotropic axis.

The order parameter of a surface structure according to the invention is larger than zero. The anisotropy of scattering is controlled by the order parameter. For low order parameters azimuthal scattering occurs into a wider azimuthal angle range, whereas for high order parameters the azimuthal angular range of scattering is smaller. The optimum order parameter therefore depends on the desired optical effect. In order to get a substantial anisotropic optical effect, the order parameter should be larger than 0.05. Preferably the order parameter is larger than 0.2, more preferably larger than 0.4 and most preferably larger than 0.6. In addition, order parameters are preferably between 0.1 and 0.9, more preferably between 0.3 and 0.7 and most preferably between 0.4 and 0.6. In another preferred embodiment, there is no azimuthal variation of the main axis of the lands within the surface relief structure, which means that the order parameter is 1.

Another parameter to control the anisotropy of scattering is the average aspect ratio of the lands within a relief structure, in the following named as the average land aspect ratio. If the average land aspect ratio equals 1 then scattering is isotropic. For the anisotropic scattering according to the invention the average land aspect ratio should be larger than 1.1. Preferably the average land aspect ratio is larger than 2 and more preferably larger than 5.

For very large values of the average land aspect ratio the range of azimuthal angles into which a significant amount of light is scattered becomes smaller, which may be a drawback for some designs in security elements. Therefore, in a preferred embodiment the average land aspect ratio is less than 50 and in a more preferred embodiment the average land aspect ratio is less than 20.

A non-periodic structure is a structure for which no definite period can be defined after which a part of the structure is repeated. According to the invention, the arrangement of the lands along the preferred scattering axis is non-periodic.

According to a preferred embodiment, the arrangement of the lands is non-periodic along the anisotropic axis.

A surface structure according to the invention may comprise lands of different distinct height levels.

In the context of the present invention the term relief roof plane is introduced as a reference plane and is defined as the plane which includes the upper surfaces of the highest lands within the surface relief structure. In an optical element comprising surface structures according to the invention the relief roof plane will most often be identical with or at least parallel to the surface of the element comprising the structure.

In a second aspect of the invention, there is provided a method for making a surface structure according to the first aspect of the invention.

A surface microstructure according to the present invention may be written into a resist material by electron beam lithography. In order to generate the asymmetric flanks of the relief structures, the incidence angle of the electron beam has to be inclined from the normal of a substrate coated with the resist material.

It is also possible to first generate a starting relief structure, which in a further step is digitized to define the shape of the lands and the grooves. The starting relief structure does not need to have lands with flat upper surfaces, but, for example, hills and valleys. Further, the starting relief does not have to exhibit distinct height levels and the depth of the structure may be different from that of the targeted structure according to the invention. However, the starting relief should provide the lateral dimensions of the desired structure according to the invention. In principle, any method can be used to generate a starting relief, which is able to generate a surface structure with compatible lateral dimensions, such as laser ablation, scratching the surface with the tip of an atomic force microscope (AFM), anisotropic shrinking processes, electron beam writing, embossing an appropriate structure or self organization of materials, in particular liquid crystalline materials. By using a process, which is disclosed in WO07/131375, the starting relief can be digitized, by reproducing a cross-section of the starting relief in a thin metal layer on a substrate, whereby the metal is locally removed. The resulting structured metal layer, which comprises the digitized relief, is then used either as a photo-mask in a photo-lithographic process or may be used as a mechanical mask in a dry etching process, preferably ion beam etching. In order to generate the structure with the asymmetric flanks, the light and the ion beam, respectively, has to be incident obliquely to the normal of the surface of the material in which the structure according to the invention is to be created.

In a third aspect, the invention provides an optical security element comprising a surface relief structure according to the first aspect of the invention.

In the simplest case, a security element according to the invention comprises a single area with a surface relief structure according to the first aspect of the invention. This may already provide a high level of security for certain applications, because of the characteristic optical feature caused by the surface structure. Preferably, there are more regions comprising surface relief structures according to the invention. The surface structure in the different regions may be identical or different. In preferred embodiments the asymmetry direction is different in different regions. The arrangement of different regions and the related parameters of the surface structure may represent any kind of information, which can be identified by tilting of the element if appropriately illuminated, for example with white light.

Optical security elements according to the invention may also incorporate other first, second or third level security features. Such features may be above, below or outside the regions of a surface structure according to the invention. The additional features may be permanently visible without generating a specific optical effect. Preferably, the additionally added feature shows a viewing angle dependency, caused, for example, by holograms, kinegrams®, cholesteric or interference layers. In a more preferred embodiment, a second level security feature is added, which can not be detected without using an observation tool. Such features are for example introduced by fluorescent or by birefringence materials. Especially preferred are birefringent layers which comprise areas of different retardation or optical axis orientation. The security feature stored in such a birefringent layer is only visible by observation with polarized light, for example using polarizer sheets.

In a fourth aspect, the invention provides an embossing tool for the reproduction of a surface relief structure according to the first aspect of the invention.

Surface relief structures according to the invention can be replicated with well known replication techniques (see for instance M. T. Gale: "Replication techniques for diffractive optical elements" in Microelectronic Engineering, Vol. 34, page 321 (1997)). It is therefore possible to mass fabricate security devices comprising surface relief - structures according to the invention at adequate costs using a replication tool.

A tool for the replication of a surface structure according to the invention can for example be manufactured by starting from an element comprising an asymmetric relief structure according to the invention on its surface. An embossing tool is then produced by electroforming or electroplating onto the surface relief structure.

In a fifth aspect, the invention provides a security device comprising surface relief structures according to the first aspect of the invention and/or security elements according to the third aspect of the invention.

Security devices comprising security elements according to the invention can be applied to or incorporated into a security document. Security documents are for example banknotes, passports, licenses, stocks and bonds, coupons, cheques, credit cards, certificates, tickets etc. The security devices further can also be applied as or incorporated into brand or product protection devices, or into means for packaging, like wrapping paper, packaging boxes, envelopes etc.. Advantageously, the security device may take the form of a tag, security strip, label, fiber, thread, laminate or patch etc..

Particularly for security applications, the surface relief microstructures have to be sealed in order to protect the device against mechanical impact and contamination as well as to prevent unauthorized and illegal making of replicas of such devices. Adequate protection and passivation films are transparent dielectric materials or materials with a specific absorption behavior that may further enhance the color appearance of the device.

BRIEF DESCRIPTION OF THE DRAWINGS

The invention is further illustrated by the accompanying drawing figures. It is emphasized that the various features are not necessarily drawn to scale.

Fig. 1.1 is an illustration of light reflection at an isotropically structured surface.

Fig. 1.2 illustrates the characteristic output light distribution from a reflection at an anisotropically scattering surface.

Fig. 1.3 illustrates the symmetry of scattering at a surface relief structure according to the state of the art.

Fig. 2 illustrates a cross-section of a surface relief structure according to the invention, with the preferred scattering plane.

Fig. 3 illustrates a cross-section of a surface relief structure comprising lands with two different height levels, with the preferred scattering plane.

Fig. 4.1 illustrates a cross section of a background art example; Fig. 4.2, Fig. 4.3, Fig. 4.4 illustrate cross-sections of three embodiments of lands within a surface relief structure according to the invention.

## DETAILED DESCRIPTION OF THE INVENTION

Because of tolerances in the production of surface relief structures according to the invention, the following definitions are given:

The structure depth is defined as the average vertical distance between the grooves and the relief roof plane. The groove level is accordingly defined as being at a distance below the relief roof plane, whereas the distance corresponds to the structure depth.

The height of a land is defined as the average vertical distance between the groove level and the upper surface of the land. The height variation within a land is preferably less than 20% of the structure depth, more preferably less than 10% of the structure depth and most preferably less than 5% of the structure depth. Variations within the upper surface include smooth, continuous variations, but also stochastical variations, which would appear as a surface roughness.

The height of a height level is the average height of lands within that height level. The variation of land heights within a height level is preferably less than 20% of the structure depth, more preferably less than 10% of the structure depth and most preferably less than 5% of the structure depth.

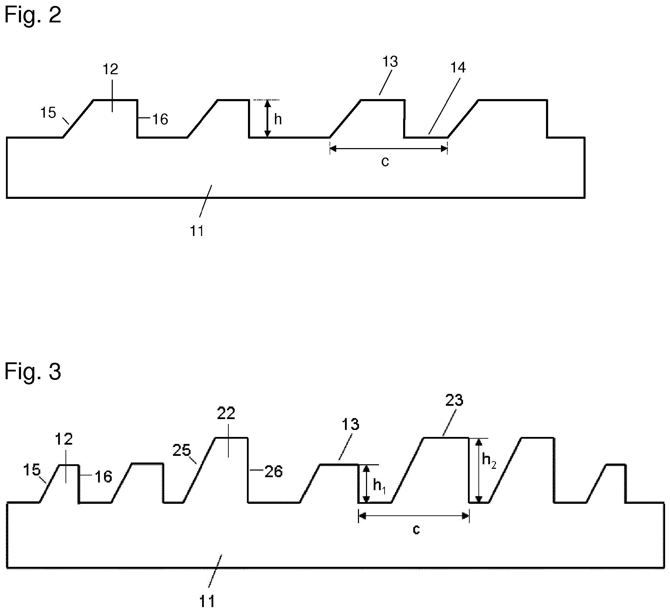

In a first embodiment of a surface relief structure according to the invention, the heights of the lands are all within the same height level. Fig. 2 depicts a cross-section of the structure with the preferred scattering plane. Lands 12 are arranged on a base layer 11. Flanks 15 and 16 of the lands are not mirror symmetric to each other with regard to the normal to the relief roof plane. The upper surface of the lands 13 and the groove surface 14 are flat and are parallel to each other. The height, indicated as h in Fig. 2, is measured as the distance between the groove surface 14 and the upper surface of the lands 13. The width of the grooves is stochastically varied around an average groove width. Similarly, the width of the upper surface of the lands is stochastically varied around an average land width. Accordingly, also the flank distance, indicated as c in Fig. 2, stochastically varies around an average flank distance. Following from the above, the lands are arranged non-periodically along the preferred scattering axis of the structure.

The interference of the scattered light is most efficient, if the ratio of the average width of the lands to the average width of the grooves is about 1:1. However, other ratios may be selected as well. Preferably the above ratio is between 0.1 and 10, more preferably between 0.2 and 5 and most preferably in the range between 0.5 and 2.

In a second embodiment of a surface relief structure according to the invention, the surface structure comprises more than one distinct height level, whereas the other features are the same as in the first embodiment above. Such multi-level structures with n different land height levels provide additional control of the interference color, since light scattered at the lands of different height levels in general interferes differently. Preferred are structures wherein n is less than 5 and more preferred are structures with n=2.

Preferably the average heights corresponding to the distinct height levels differ by more than 20% of the structure depth.

As an example, Fig. 3 illustrates a cross-section through a structure with lands of two height levels. The two heights are indicated as h1 and h2. The lands 12 of the first height have an upper surface 13 and asymmetric flanks 15 and 16 and the lands 22 of the second height have an upper surface 23 and asymmetric flanks 25 and 26. The lands of the different heights may be arranged in any sequence, for example, a number of lands of same height may be adjacent to each other or, as another example, lands of different height may be arranged alternately.

Color and intensity of the light resulting from the interference of light scattered at the lands within a multi-level structure can be controlled by the heights of the n different height levels of the lands as well as by the ratio of the widths of lands and grooves. The interference of the scattered light is most efficient, if the ratio of the average width of the lands, independent of the height level, to the average width of the grooves is about 1:1. However, other ratios may be selected as well. Preferably the above ratio is between 0.1 and 10, more preferably between 0.2 and 5 and most preferably in the range between 0.5 and 2.

In order to tailor the color of the scattered light, the lands within to the different height levels may have different width. Preferably the ratio of the average width of lands within each height level to the average width of all lands is between 0.1 and 10, more preferably between 0.2 and 5 and most preferably between 0.5 and 2.

The lands are preferably made of the same material as the base layer 11, but it is also possible that the base layer material is different from the material of the lands. Suitable materials for base layer and lands are for example plastic, metal, glass, fused silica, ceramics, photo-resist and silicon. Preferred metals are aluminum, silver, chromium, nickel and copper.

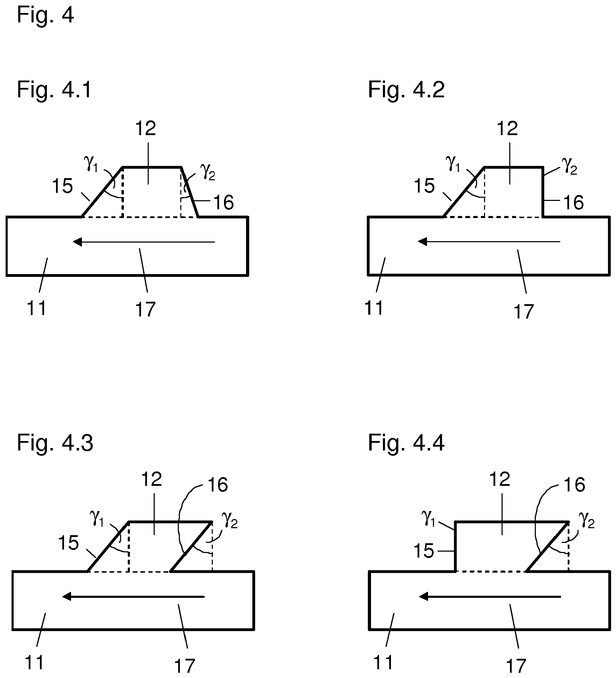

Fig. 4 depicts cross sections through the preferred scattering plane of one background art example and three embodiments regarding the asymmetry of the flanks of the lands according to the invention. The angles $\gamma_1$ and $\gamma_2$ in Fig. 4 quantify the inclination of the opposing flanks 15 and 16 relative to the normal to the relief roof plane. The angles are defined as positive if the foot of the corresponding flank is outside the vertically projected upper surface of the land and negative if the foot of the flank is inside the vertically projected upper surface. Surface structures in which the angles $\gamma_1$ and $\gamma_2$ are interchanged do not constitute new embodiments as they correspond to a rotation of 180° of the structure around an axis normal to the relief roof plane.

In order to describe the azimuthal orientation of a surface structure according to the invention, an asymmetry direction 17 is defined which points from the flank with the lower inclination angle into the direction of the flank with the higher inclination angle. The asymmetry direction 17 is indicated in figures 4.1 to 4.4. Accordingly, the asymmetry direction is rotated by 180° around an axis normal to the relief roof plane if the angles $\gamma_1$ and $\gamma_2$ are interchanged.

Fig. 4.1 illustrates a background art example of asymmetric flanks according to the invention, wherein both angles $\gamma_1$ and $\gamma_2$ are positive, but different from each other. The case of identical angles would correspond to a symmetric profile, which is outside the scope of the present invention. Preferably the difference between $\gamma_1$ and $\gamma_2$ is larger than 10°, more preferably larger than 30° and most preferably larger than 45°.

In the first embodiment of asymmetric flanks according to the invention, which is depicted in Fig. 4.2, $\gamma_1$ is positive and $\gamma_2$ is zero, which corresponds to a vertical flank. Preferably $\gamma_1$ is larger than 10°, more preferably larger than 30° and most preferably larger than 45°.

In the second embodiment of asymmetric flanks, shown in Fig. 4.3, $\gamma_1$ is positive, whereas $\gamma_2$ is negative. Preferably $\gamma_1$ is larger than 10°, more preferably larger than 30° and most preferably larger than 45°. Preferably $\gamma_2$ is less than -10°, more preferably less than -30° and most preferably less than -45°. The absolute value $|\gamma_1|$ may be higher or lower than the absolute value of $|\gamma_2|$ or both values may be equal. Preferably $|\gamma_1| - |\gamma_2|$ is less than 30°, more preferably less than 15°, even more preferably less than 5° and most preferably less than 1 °.

In the third embodiment of asymmetric flanks according to the invention, which is depicted in Fig. 4.4, $\gamma_1$ is zero, which corresponds to a vertical flank and $\gamma_2$ is negative. Preferably $\gamma_2$ is less than -10°, more preferably less than -30° and most preferably less than -45°.

The following specifications apply to all of the embodiments above.

The variation of the vertical distance between the grooves and the relief roof plane within the surface relief structure is preferably less than 10% and more preferably less than 5% of the structure depth.

Preferably the average width of the lands is in the range from 0.2 micrometer to 10 micrometer and more preferably in the range from 0.4 micrometer to 6 micrometer.

Preferably the average length of the lands is less than 100 micrometers, more preferably less than 50 micrometers and most preferably less than 30 micrometers.

The average flank distance within structures of the present invention is preferably in the range of 0.4 micrometer to 20 micrometer, more preferably in the range of 0.4 micrometer to 10 micrometer and most preferably in the range of 1 micrometer to 5 micrometer.

The upper surface of the lands as well as the surface of the grooves are flat and are substantially parallel to each other.

The ratio of the width to the height of a land is preferably larger than 1, more preferably larger than 2 and most preferably larger than 5.

Preferably the height levels according to the invention are in the range between 50 nm and 2000 nm, more preferably in the range between 100 nm and 1000 nm and most preferably between 200 nm and 600 nm.

To further characterize a surface structure according to the present invention, an averaged one-dimensional autocorrelation function AC(x) of the surface relief microstructure is introduced.

The one-dimensional autocorrelation function can be understood as a measure for the predictability of the surface profile for two spatially separated points by a distance x in the plane.

The autocorrelation function AC(x) of a function P(x), such as the surface relief microstructure profile, is defined as

$$AC(x) = \int P(x') \cdot P(x'+x) \cdot dx' \quad .$$

More details on the autocorrelation function and corresponding programming issues can be found e.g. in "Numerical recipes in C : the art of scientific computing / William H. Press ; Saul A. Teukolsky ; William T. Vetterling ; Brian P. Flannery. - Cambridge; New York : Cambridge University Press, 1992".

For a non-periodic or non-deterministic surface profile, the autocorrelation function decays rapidly with increasing x. On the other hand, for a deterministic surface profile found for instance in a grating, the autocorrelation does not decay. In the case of the grating the autocorrelation function is however modulated with a periodic function. For a nearly periodic grating the envelope decays with increasing x as well.

With the help of the one-dimensional autocorrelation function, a single characteristic number, an autocorrelation length L, can be defined. It is the length for which the envelope of the autocorrelation function decays to a certain threshold value. For the present purpose, a threshold value of 10 % of AC(x=0) proved to be suitable.

Preferred embodiments of surface relief microstructures according to the invention are characterized in that the autocorrelation length L along the preferred scattering axis is smaller than five times an average flank distance c. More preferred are surface relief microstructures, wherein L is smaller than three times an average flank distance and even more preferred are surface relief microstructures, wherein L is smaller than two average flank distances.

For surface relief microstructures according to the invention the anisotropic axis can be found for instance on the basis of an adequate AFM image or a derived autocorrelation function. The one-dimensional autocorrelation function has then to be evaluated along lines parallel to the preferred scattering axis and finally averaged, such that an averaged one-dimensional autocorrelation function results. From this averaged one-dimensional autocorrelation function, the envelope and the autocorrelation length L is determined.

In the context of the present invention a region is an area within a security element, which comprises a surface relief structure according to the invention with a specific set of structure parameters. The set of parameters includes the anisotropic axis, the asymmetry direction, the order parameter, the averaged land aspect ratio, the average flank distance, the inclination angles of the flanks, the number of height levels of lands and the corresponding heights of the height levels, the structure depth, the averaged length and width of the lands.

The lands according to the invention may extend from one boundary of a region to another boundary of the region. In particular, lands may be as long as the longest distance within a region.

A security element according to the invention typically comprises different regions. There may be two or more regions, which can be described by identical structure parameters. Preferably, there are two or more regions, which differ in one or more structure parameters.

In a preferred embodiment, an element according to the invention comprises at least two regions, which differ in the direction of the anisotropic axes. Preferably the difference in the direction of the anisotropic axes is between 80° and 100°, more preferably the difference of the angles is 90°.

In another preferred embodiment, an element according to the invention comprises at least two regions, which differ in the asymmetry direction by an angle between 160° and 200°. Most preferable is an angle of 180°.

In a further embodiment, an element according to the invention comprises at least two regions, which differ in the structure depth.

According to a preferred embodiment, a security element has a pattern comprising a plurality of regions with optically effective surface relief microstructures according to the invention. The pattern may represent or may be part of any kind of information such as an image, a text, a picture, a logo or a barcode. The pattern may also represent different information, each of which is observable under a different observation angle. A security element may also comprise areas with any other kind of microstructures, such as, for example, optical gratings as well as isotropic or anisotropic microstructures. In addition it may comprise areas without microstructures. The regions are preferably formed as pixels.

In order to optimize the efficiency of the desired optical effect and/or to provide additional security features, a security element according to the invention may comprise additional layers, which are partially or fully arranged above or below the layer comprising the surface structures according to the invention.

In a first embodiment related to additional layers, a reflective or semi-reflective layer is applied. The reflective layer may be a thin film of a metal, such as aluminum, chromium, silver, gold and copper, or the layer may contain reflecting pigments. A semi-reflective layer can, for example, be achieved by making the layer sufficiently thin. If the reflective or semi-reflective layer is only applied to certain regions or parts of certain regions of the optical element, the security element can be used in transmission as well as in reflection. The information visible in reflection can then be different from that which is visible in transmission.

In another embodiment, the surface of the relief structure in an optical element may be fully or partially covered with a thin layer of dielectric material. Preferably the refractive index of the dielectric material and that of the lands in the relief structure are different from each other. More preferably the refractive index of the dielectric material is higher than that of the lands. Examples of high index refraction materials are ZnS, ZnSe, ITO or TiO2. Composite materials including nanoparticles of high index refraction materials may also be suitable. If the dielectric material is only applied to certain regions or parts of certain regions of the optical element, the optical properties for the regions or parts of regions with and without dielectric material may be different, which adds an additional security feature into the security element.

In still another embodiment of a security element according to the invention, an absorptive colored layer is applied below or above the relief structure. The colored layer may be transmissive or opaque. For example a colored material could be printed below or above certain regions or parts of certain regions. The printed layer may also represent information. Because of the viewing angle dependent appearance of the surface structure according to the invention, the information represented in the surface structure is seen only under certain angle, whereas the printed information is visible under any angle. Thus the security element according to such an embodiment combines different security features.

A further embodiment of a security element comprises multiple layers of the above types, each of which may be fully or partially applied. The layers may all be either above or below the relief structure or some layers may be below and others above the relief structure. The layers may fully or partially overlap but some or all of them can also be applied to different areas, such that overlap exists not for all or even none of the layers.

In order to protect an optical element according to the invention from being copied by mechanical contact, the relief structure may be filled up with a dielectric material. However, the dielectric material has to be chosen such that the desired optical properties of the element do not disappear. For example, if the surface structure is not covered by thin layers, the refractive index of the dielectric material has to be different from that of the material of the lands. On the other hand, if the relief structure is covered by a thin metallic layer, the refractive index of the dielectric material may have any value.

In another embodiment, an element according to the invention comprises a liquid crystal layer, which comprises cross-linked liquid crystals. The liquid crystal layer may be below or above the layer comprising the surface relief structure. The liquid crystal layer may be applied only to certain areas of the element. The liquid crystals in the layer may be twisted, such as a cholesteric liquid crystal, or non-twisted. In case of non-twisted liquid crystals the liquid crystal layer may comprise a pattern of different alignment properties, such as the azimuthal or polar orientation direction. In a preferred embodiment, the liquid crystal layer is aligned by the surface relief structure.

In a preferred embodiment the liquid crystal layer is cholesteric. Preferably, the reflection band of the cholesteric layer is within the visible wavelength range of light. Alternatively, the reflection band may be in the infrared range of light, close the visible wavelengths, such that by oblique observation the effective reflection band shifts into the visible range. Due to the characteristic feature of cholesteric materials, synergistic optical effects together with that caused by the relief structure may be generated, which are different in transmission and reflection.

The present invention furthermore relates to a method for making elements having surface relief microstructures as described above.

In a first embodiment related to the method of making a surface structure according to the invention, an electron beam writer is used to write the surface structure. The beam diameter of such writers is suitable to generate very narrow resist exposure areas and the positioning can be done even on a nanometer raster. In order to generate the asymmetric flanks of the relief structures, the incidence angle of the electron beam has to be inclined from the normal of a substrate coated with the resist material.

A background method for making a surface starts from a relief structure, which does not necessarily have lands with flat upper surfaces, but for example hills and valleys. There are different known methods to generate such a starting relief structures, such as self organization in copolymer or dewetting, laser ablation, scratching the surface with the tip of an atomic force microscope (AFM), electrolytically etching of metals or semiconductors, such as aluminum or silicon, writing with an electron beam, embossing using a surface relief pattern as an embossing tool, local polymerization or cross-linking at the surface of a layer comprising pre-polymers and subsequently removing pre-polymers from areas in which no polymerization or cross-linking took place. It is also possible to combine several of the above methods to generate a starting relief structure. A preferred method for the generation of a starting relief microstructure uses phase-separation and crosslinking of a mixture of crosslinkable and non-crosslinkable materials. The starting relief microstructure is obtained by making a mixture of at least two materials of which at least one is crosslinkable and at least one other is non-crosslinkable, applying the mixture to a substrate, cross-linking at least a substantial portion of the crosslinkable material, and removing at least a substantial portion of the non-crosslinkable material. To generate anisotropic microstructures, the crosslinkable material can be maintained in an oriented state, e.g. by means of an underlying orientation layer or an orientating substrate surface, during cross-linking.

By using a process, which is disclosed in WO07/131375, a photo-mask can be generated comprising a digitized image of the starting relief structure, which corresponds to a cross-section of the relief structure with a plane parallel to the substrate surface. A microstructure according to the present invention can then be generated in a resin or resist by reproducing the microstructure of the photo-mask using photolithographic methods. However, instead of irradiating the resin or resist vertically through the mask, the method of the invention uses oblique irradiation to generate the asymmetric flanks of the lands. The substrate of the photo-mask has to be transparent for the wavelengths of the irradiating light and is typically made of glass or fused silica.

In a third embodiment, the same initial process steps as for the generation of the above photo-mask are used to generate a digitized image of a relief structure in a thin metal layer on a substrate. Any kind of metal may be used for the metal layer. Preferred metals are silver, chromium, gold, copper and aluminum. Any kind of material can be used for the substrate, such as glass, plastic, metal, ceramics, silicon or fused silica. The digitized image in the metal layer is like a black and white image, in which the white part corresponds to areas in which the metal has been removed, and the black part corresponds to areas in which the metal layer is still present. Correspondingly, the surface of the substrate below the metal layer is laid free in the areas in which the metal layer has been removed. The surface structure comprising lands with anisotropic flanks can then be generated in the substrate by oblique dry etching the substrate through the structured metal layer. Preferred dry etching methods are ion beam etching (IBE), reactive ion beam etching (RIBE) and chemically assisted ion beam etching (CAIBE). In each of these ion beam methods the ion beam has to be incident from an oblique direction relative to the normal to the substrate surface in order to generate the asymmetric flanks of the lands. The geometry of the lands can be controlled by process parameters such as the type of gases used, the etching time as well as energy and angle of incidence of the beam. After etching is finished, the remaining metal layer may be removed.

**Claims**

1. Surface relief structure for use in optical security elements, which comprises grooves (14) and anisotropic lands (12, 22), wherein

   - the grooves and lands are arranged non-periodically along the preferred scattering axis, and
   - the heights of the lands are within one or more height levels, wherein the height of a land is the average vertical distance between the groove level and the upper surface of the land, and
   - the upper surfaces of the lands (13, 23) and the surfaces of the grooves (14) are flat and substantially parallel to each other,

   wherein in a cross-section with the preferred scattering plane (9) the flanks (15, 16, 25, 26) of the lands (12, 22) are asymmetric, **characterized in that** the angles $\gamma_1$, $\gamma_2$ of the first and of the second flank of a land in the cross-section are either

   $$\gamma_1 > 10° \text{ and } \gamma_2 \leq 0°,$$

   or

   $$\gamma_1 = 0° \text{ and } \gamma_2 < -10°,$$

   wherein the angles $\gamma_1$ and $\gamma_2$ quantify the inclination of the opposing flanks (15, 16, 25, 26) relative to the normal to the relief roof plane and are defined as positive if the foot of the corresponding flank is outside the vertically projected upper surface of the land and negative if the foot of the flank is inside the vertically projected upper surface;

   wherein the shape of the flanks is selected from a straight line or a curve;
   wherein in the case the shape of the flanks being a curve the angles $\gamma 1$, $\gamma 2$ are determined as an inclination angle, which is determined from a straight line, connecting the top and foot of the flank.

2. Surface relief structure according to claim 1, wherein the average land aspect ratio is larger than 1.1.

3. Surface relief structure according to claim 1 or 2, wherein the ratio of the average width of the lands (12, 22) to the average width of the grooves (14) is between 0.1 and 10.

4. Surface relief structure according to any preceding claim, wherein the average width of the lands (12, 22) is in the range from 0.2 micrometer to 10 micrometer.

5. Surface relief structure according to any preceding claim, wherein the average length of the lands (12, 22) is less than 100 micrometer.

6. Surface relief structure according to any preceding claim, wherein the average flank distance is in the range from 0.4 micrometer to 20 micrometer.

7. Surface relief structure according to any preceding claim, wherein the height levels are in the range between 50 nanometer and 2000 nanometer.

8. Surface relief structure according to any of claims 1 to 7, wherein the angle of the first flank of a land in the cross-section is $\gamma_1 > +10°$ and that of the second flank is $\gamma_2 < -10°$.

9. Method of making a surface relief structure according to any preceding claims, comprising

   - providing a starting relief structure
   - digitizing the relief structure in the form of a pattern into a thin metal layer on a base material such that the metal is removed in certain areas
   - transferring the pattern into the base material by oblique ion beam etching.

10. Embossing tool comprising a surface structure according to any of claims 1 to 8.

11. Security element comprising a surface relief structure according to any of claims 1 to 8.

12. Security element according to claim 11, comprising at least two regions, which differ in the asymmetry direction by an angle between 160° and 200°.

13. Security element according to claim 11 or 12, wherein a liquid crystal layer is applied at least partially above or below the layer comprising the relief structure.

14. Security device, comprising a security element according to any of claims 11 to 13.

**Patentansprüche**

1. Oberflächenreliefstruktur zur Verwendung in optischen Sicherheitselementen, die Rillen (14) und anisotrope Stege (12, 22) umfasst, wobei

   - die Rillen und Stege nicht periodisch entlang der bevorzugten Streuachse angeordnet sind, und
   - die Höhen der Stege innerhalb eines oder mehrerer Höhenniveaus liegen, wobei die Höhe eines Stegs der durchschnittliche vertikale Abstand zwischen dem Rillenniveau und der oberen Oberfläche des Stegs ist, und

- die oberen Oberflächen der Stege (13, 23) und die Oberflächen der Rillen (14) flach und im Wesentlichen parallel zueinander sind,

wobei in einem Querschnitt mit der bevorzugten Streuebene (9) die Flanken (15, 16, 25, 26) der Stege (12, 22) asymmetrisch sind, **dadurch gekennzeichnet, dass** die Winkel $\gamma_1$, $\gamma_2$ im Querschnitt der ersten und der zweiten Flanke eines Stegs entweder

$$\gamma_1 > 10° \text{ und } \gamma_2 \leq 0°,$$

oder

$$\gamma_1 = 0° \text{ und } \gamma_2 < -10°$$

sind,

wobei die Winkel $\gamma_1$ und $\gamma_2$ die Neigung der gegenüberliegenden Flanken (15, 16, 25, 26) bezüglich der Normalen zur Reliefdachebene quantifizieren und als positiv definiert sind, wenn der Fuß der entsprechenden Flanke außerhalb der vertikal projizierten oberen Fläche des Stegs liegt und negativ, wenn der Fuß der Flanke innerhalb der vertikal projizierten oberen Fläche liegt; wobei die Form der Flanken eine gerade Linie oder einer Kurve ist; wobei in dem Fall, dass die Form der Flanken eine Kurve ist, die Winkel $\gamma_1$, $\gamma_2$ als Neigungswinkel einer geraden Linie bestimmt werden, die die Oberseite und den Fuß der Flanke verbindet.

2. Oberflächenreliefstruktur nach Anspruch 1, wobei das durchschnittliche Längen- zu Seitenverhältnis der Stege größer als 1,1 ist.

3. Oberflächenreliefstruktur nach Anspruch 1 oder 2, wobei das Verhältnis der durchschnittlichen Breite der Stege (12, 22) zur durchschnittlichen Breite der Rillen (14) zwischen 0,1 und 10 liegt.

4. Oberflächenreliefstruktur nach einem der vorhergehenden Ansprüche, wobei die durchschnittliche Breite der Stege (12, 22) im Bereich von 0,2 Mikrometer bis 10 Mikrometer liegt.

5. Oberflächenreliefstruktur nach einem der vorhergehenden Ansprüche, wobei die durchschnittliche Länge der Stege (12, 22) weniger als 100 Mikrometer beträgt.

6. Oberflächenreliefstruktur nach einem der vorhergehenden Ansprüche, wobei der durchschnittliche Flankenabstand im Bereich von 0,4 Mikrometer bis 20 Mikrometer liegt.

7. Oberflächenreliefstruktur nach einem der vorhergehenden Ansprüche, wobei die Höhenniveaus im Bereich zwischen 50 Nanometer und 2000 Nanometer liegen.

8. Oberflächenreliefstruktur nach einem der Ansprüche 1 bis 7, wobei im Querschnitt der Winkel der ersten Flanke eines Stegs $\gamma_1 > +10°$ und der der zweiten Flanke $\gamma_2 < -10°$ beträgt.

9. Verfahren zur Herstellung einer Oberflächenreliefstruktur nach einem der vorhergehenden Ansprüche, umfassend

- Bereitstellen einer Ausgangsreliefstruktur
- Digitalisieren der Reliefstruktur in der Form eines Musters in eine dünne Metallschicht auf einem Grundmaterial derart, dass das Metall bereichsweise entfernt wird
- Übertragen des Musters in das Grundmaterial durch schräges Ionenstrahlätzen.

10. Prägewerkzeug mit einer Oberflächenstruktur nach einem der Ansprüche 1 bis 8.

11. Sicherheitselement umfassend eine Oberflächenreliefstruktur nach einem der Ansprüche 1 bis 8.

12. Sicherheitselement nach Anspruch 11, umfassend mindestens zwei Bereiche, deren in Asymmetrierichtungen sich um einen Winkel zwischen 160° und 200° unterscheiden.

13. Sicherheitselement nach Anspruch 11 oder 12, wobei über oder unter der Schicht mit der Reliefstruktur zumindest teilweise eine Flüssigkristallschicht aufgebracht ist.

14. Sicherheitsvorrichtung, umfassend ein Sicherheitselement nach einem der Ansprüche 11 bis 13.

**Revendications**

1. Structure à relief de surface destinée à une utilisation dans des éléments de sécurité optiques, qui comporte des rainures (14) et des méplats anisotropes (12, 22), dans laquelle

- les rainures et les méplats sont agencés de manière non périodique le long de l'axe de diffusion préféré, et

- les hauteurs des méplats sont dans les limites d'un ou plusieurs niveaux de hauteur, dans laquelle la hauteur d'un méplat est la distance verticale moyenne entre le niveau des rainures et la surface supérieure des méplats, et

- les surfaces supérieures des méplats (13, 23) et les surfaces des rainures (14) sont planes et sensiblement parallèles les unes aux autres, dans laquelle, dans une section transversale du plan de diffusion préféré (9), les flancs (15, 16, 25, 26) des méplats (12, 22) sont asymétriques, **caractérisée en ce que** les angles $\gamma_1$, $\gamma_2$ du premier et du second flanc d'un méplat dans la section transversale sont

$$\gamma_1 > 10° \text{ et } \gamma_2 \leq 0°,$$

ou

$$\gamma_1 = 0° \text{ et } \gamma_2 < -10°,$$

dans laquelle les angles $\gamma_1$ et $\gamma_2$ quantifient l'inclinaison des flancs opposés (15, 16, 25, 26) par rapport à la normale au plan de toit en relief et sont définis comme étant positifs si le pied du flanc correspondant est à l'extérieur de la surface supérieure projetée verticalement du méplat et négatifs si le pied du flanc est à l'intérieur de la surface supérieure projetée verticalement, dans laquelle la forme des flancs est choisi parmi une ligne droite ou une courbe, dans laquelle, dans le cas où la forme des flancs est une courbe, les angles $\gamma_1$ et $\gamma_2$ sont déterminés comme un angle d'inclinaison, qui est déterminé à partir d'une ligne droite, reliant le sommet et le pied d'un flanc.

2. Structure à relief de surface selon la revendication 1, dans laquelle le rapport d'aspect moyen des méplats est supérieur à 1,1.

3. Structure à relief de surface selon la revendication 1 ou 2, dans laquelle le rapport de la largeur moyenne des méplats (12, 22) sur la largeur moyenne des rainures (14) est compris entre 0,1 et 10.

4. Structure à relief de surface selon l'une quelconque des revendications précédentes, dans laquelle la largeur moyenne des méplats (12, 22) est dans la plage de 0,2 micromètre à 10 micromètres.

5. Structure à relief de surface selon l'une quelconque des revendications précédentes, dans laquelle la longueur moyenne des méplats (12, 22) est inférieure à 100 micromètres.

6. Structure à relief de surface selon l'une quelconque des revendications précédentes, dans laquelle la distance moyenne entre les flancs est dans la plage de 0,4 micromètre à 20 micromètres.

7. Structure à relief de surface selon l'une quelconque des revendications précédentes, dans laquelle les niveaux de hauteur sont dans la plage comprise entre 50 nanomètres et 2 000 nanomètres.

8. Structure à relief de surface selon l'une quelconque des revendications 1 à 7, dans laquelle l'angle du premier flanc d'un méplat dans la section transversale est $\gamma_1 > +10°$ et celui du second flanc est $\gamma_2 < -10°$.

9. Procédé de fabrication d'une structure à relief de surface selon l'une quelconque des revendications précédentes, comportant les étapes consistant à :

- fournir une structure en relief initiale,
- numériser la structure en relief sous la forme d'un motif dans une couche de métal mince sur un matériau de base de telle sorte que le métal est retiré dans certaines zones,
- transférer le motif dans le matériau de base par gravure par faisceau d'ions oblique.

10. Outil de gaufrage comportant une structure de surface selon l'une quelconque des revendications 1 à 8.

11. Élément de sécurité comportant une structure à relief de surface selon l'une quelconque des revendications 1 à 8.

12. Élément de sécurité selon la revendication 11, comportant au moins deux zones, qui diffèrent dans la direction d'asymétrie d'un angle compris entre 160° et 200°.

13. Élément de sécurité selon la revendication 11 ou 12, dans lequel une couche de cristaux liquides est appliquée au moins partiellement au-dessus ou au-dessous de la couche comportant la structure en relief.

14. Dispositif de sécurité, comportant un élément de sécurité selon l'une quelconque des revendications 11 à 13.

Fig. 1.1

Fig. 1.2

Fig. 1.3

Fig. 2

Fig. 3

Fig. 4

Fig. 4.1

12
$\gamma_1$
$\gamma_2$
15
16
11
17

Fig. 4.2

12
$\gamma_1$
$\gamma_2$
15
16
11
17

Fig. 4.3

12
16
$\gamma_1$
$\gamma_2$
15
11
17

Fig. 4.4

12
16
$\gamma_1$
$\gamma_2$
15
11
17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5101184 A
- US 20050068625 A
- WO 2007131375 A

- US 2007058260 A1
- WO 07131375 A

**Non-patent literature cited in the description**

- **M. T. GALE.** Replication techniques for diffractive optical elements. *Microelectronic Engineering,* 1997, vol. 34, 321

- **WILLIAM H. PRESS ; SAUL A. TEUKOLSKY ; WILLIAM T. VETTERLING ; BRIAN P. FLANNERY.** Numerical recipes in C : the art of scientific computing. Cambridge University Press, 1992